# FASCICULE DE BREVET EUROPEEN

(11) **EP 1 789 266 B1**
(45) Date de publication et mention de la délivrance du brevet: **14.01.2009**
(21) Numéro de dépôt: 05774180.3
(22) Date de dépôt: 28.06.2005
(51) Int. Cl.: B60C 17/00

(54) **PNEUMATIQUE A MOBILITE ETENDUE AVEC ZONE D'ANCRAGE SURABAISSEE**
REIFEN MIT ERWEITERTER MOBILITÄT, DER MEHRERE SEHR NIEDRIGE ANKERBEREICHE AUFWEIST
EXTENDED MOBILITY TYRE COMPRISING SEVERAL SUPERLOW ANCHOR AREAS

(30) Priorité: 31.08.2004 FR 0409264
(43) Date de publication de la demande: 30.05.2007
(73) Titulaire: Société de Technologie MICHELIN, 63000 Clermont-Ferrand (FR); Michelin Recherche et Technique S.A., 1763 Granges-Paccot (CH)
(72) Inventeur: SHEPHERD, Russell, SIMPSONVILLE, South Carolina 29681 (US)
(74) Mandataire: Dequire, Philippe Jean-Marie Denis
(86) Numéro de dépôt international: PCT/EP2005/053028
(87) Numéro de publication internationale: WO 2006/024559

(56) Documents cités:
- EP-A- 1 428 690
- WO-A-03/029033
- PATENT ABSTRACTS OF JAPAN vol. 2000, no. 02, 29 février 2000 (2000-02-29) & JP 11 310014 A (BRIDGESTONE CORP), 9 novembre 1999 (1999-11-09)

## Description

La présente invention concerne un pneumatique à mobilité étendue de type à flancs autoporteurs, dont les caractéristiques de coincement contre le rebord ou crochet d'une jante correspondante sont optimales, contribuant de ce fait à une amélioration des caractéristiques de roulage en mode dégradé.

Depuis quelques années, les manufacturiers de pneumatiques consentent des efforts particulièrement importants afin de développer des solutions originales à un problème datant du début même de l'utilisation des roues chaussées de pneus de type gonflés, à savoir comment permettre au véhicule de poursuivre sa route malgré une perte importante ou totale de pression d'un ou plusieurs pneumatiques. Pendant des décennies, la roue de secours fut considérée comme la solution unique et universelle. Puis, plus récemment, les avantages considérables liés à sa suppression éventuelle sont apparus. Le concept de «mobilité étendue » se développe. Les techniques associées permettent de rouler avec le même pneumatique, en fonction de certaines limites à respecter, après une crevaison ou une chute de pression. Cela permet par exemple de se rendre à un point de dépannage sans devoir s'arrêter, dans des circonstances souvent hasardeuses, pour installer la roue de secours.

Deux grands types de technologies pour mobilité étendue apparaissent aujourd'hui sur le marché automobile. D'une part, on retrouve les pneumatiques de type autoporteur, (souvent désignés par leur appellation en langue anglaise ZP pour «zéro pressure»). Les pneus autoporteurs sont susceptibles de supporter une charge à pression réduite, voire sans pression, grâce à des flancs renforcés, le plus souvent au moyen d'inserts en matière caoutchoutique, prévus dans les flancs.

D'autre part, on retrouve des roues équipées d'appuis, susceptibles de supporter l'intérieur de la bande de roulement d'un pneumatique lors d'un affaissement des flancs suite à une chute de pression. Cette solution est avantageusement couplée à un pneumatique comportant une zone basse susceptible de minimiser les risques de glissement du pneumatique hors de la jante. Cette solution est avantageuse puisqu'elle permet de conserver sensiblement intactes les caractéristiques de roulage en conditions normales. Par contre, elle présente l'inconvénient de nécessiter une pièce additionnelle, l'appui, pour chacune des roues du véhicule.

Afin de réaliser des pneumatiques à flancs autoporteurs de haut niveau de qualité et de fiabilité, il est souhaitable de pouvoir assurer des caractéristiques de roulage en mode dégradé (c'est-à-dire à pression faible ou nulle) qui soient les plus avantageuses possibles, notamment en ce qui a trait au rayon d'action. Un des points clés permettant d'accroître l'autonomie de ce type de produits réside dans la maîtrise des phénomènes de décoincement. En effet, en roulage en mode dégradé, les contraintes subies au niveau de l'interface jante/zone basse du pneumatique sont extrêmes, et le flambage du flanc entraîne une forte tendance de la zone basse du pneumatique à vouloir glisser contre le rebord de jante.

Plusieurs solutions sont aujourd'hui connues pour tenter de pallier ce type de problème. Par exemple, de façon classique, afin d'augmenter la rigidité latérale d'un pneumatique de type autoporteur, un utilise classiquement un insert de flanc plus épais et/ou avec un matériau dont le module est plus élevé que celui de référence.

Cependant, ces différentes solutions ne permettent pas toujours d'optimiser les autres propriétés du produit. Or, pour certains produits, notamment hauts de gamme, il est souhaitable de pouvoir obtenir de meilleurs compromis entre les caractéristiques du pneumatique. En particulier, on souhaite agir de façon à réduire la susceptibilité au décoincement lors de roulage à pression faible ou nulle, en conservant au mieux les qualités de confort.

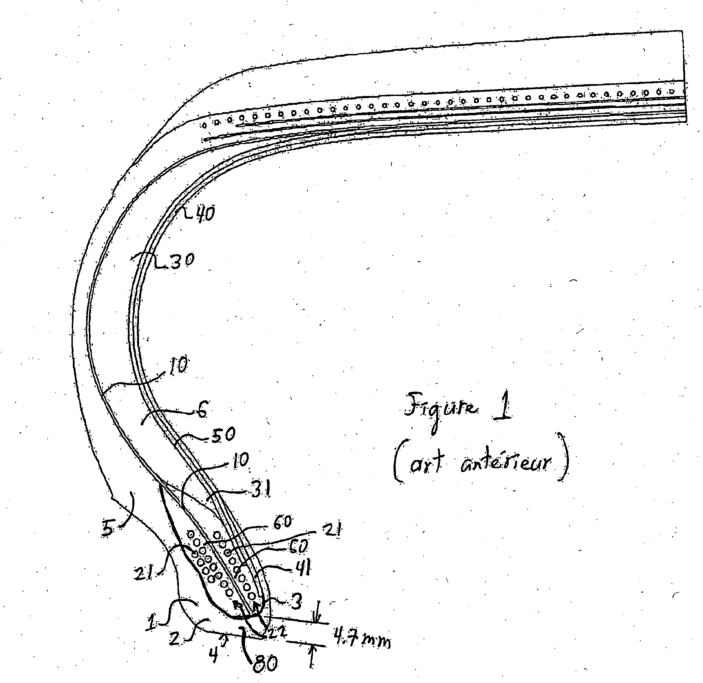

Par ailleurs, on connaît, un pneumatique de type 225/50R17 ZCY (voir figure 1), conçu par la demanderesse, qui comporte, en zone basse, une zone de siège, radialement intérieurement à la zone d'ancrage: cette zone a, classiquement, une épaisseur supérieure à 4mm. Dans cet exemple, elle a une épaisseur de 4.7 mm.

Pour pallier ces différents inconvénients, l'invention propose un pneumatique adapté pour roulage à mobilité étendue, comportant au moins une structure de renfort de type carcasse ancrée de chaque côté dudit pneumatique dans un bourrelet dont la base est destinée à être montée sur un siège de jante, chacun desdits bourrelets s'étendant sensiblement radialement extérieurement sous la forme de flancs, les flancs rejoignant radialement vers l'extérieur une bande de roulement, la structure de renfort de type carcasse s'étendant circonférentiellement depuis le bourrelet vers ledit flanc, une armature de sommet, chacun desdits flancs étant renforcé par un insert de flanc constitué de composition de caoutchouc susceptible de supporter une charge correspondant à une partie du poids du véhicule lors d'une situation dans laquelle la pression de gonflage est sensiblement réduite ou nulle, chacun des bourrelets comportant par ailleurs une zone d'ancrage permettant le maintien de la structure de renfort et comportant d'une part un mélange caoutchoutique d'ancrage et d'autre part une série d'enroulements filaires circonférentiels disposés dans ledit mélange caoutchoutique de part et d'autre de la portion d'extrémité de la structure de renfort, une zone de siège de bourrelet, constituée d'un mélange caoutchoutique de module d'extension sécant à 10% de déformation, mesuré à 23° C selon la norme ASTM D 412, inférieur à celui du mélange de la zone d'ancrage, étant disposée radialement intérieurement à la zone d'ancrage, et permet de séparer ladite zone d'ancrage du siège de la jante lorsque le pneumatique est monté, ladite zone comportant une épaisseur maximale de 3.0 mm, et de préférence égale ou inférieure à 2.5 mm.

Ce type de disposition permet d'augmenter la rigidité en torsion, sans pour autant affecter les propriétés intrinsèques de la zone basse et/ou des flancs, comme c'est le cas par exemple lorsqu'on utilise un insert de flanc plus épais. Grâce à cette solution, on réduit la susceptibilité au décoincement lors de roulage à pression faible ou nulle.

De manière avantageuse, ladite zone d'ancrage comporte, dans sa portion radialement inférieure, une portion libre de fils circonférentiels.

D'autre part, la zone d'ancrage comporte avantageusement, dans sa portion radialement inférieure, une portion libre de structure de renfort. De manière avantageuse, la portion libre de fils circonférentiels s'étend radialement sur une distance supérieure par rapport à la portion libre de fils de structure de renfort.

Ladite zone de siège forme de préférence une bande d'épaisseur sensiblement constante sur plus du quart de la largeur de la zone d'ancrage.

De manière avantageuse, le mélange caoutchoutique de la zone d'ancrage est constituée d'une composition de caoutchouc présentant un module d'extension sécant MA10 à 10,% de déformation, mesuré à 23° C selon la norme ASTM D 412, supérieur à 10 MPa, et de préférence entre 30 et 60.

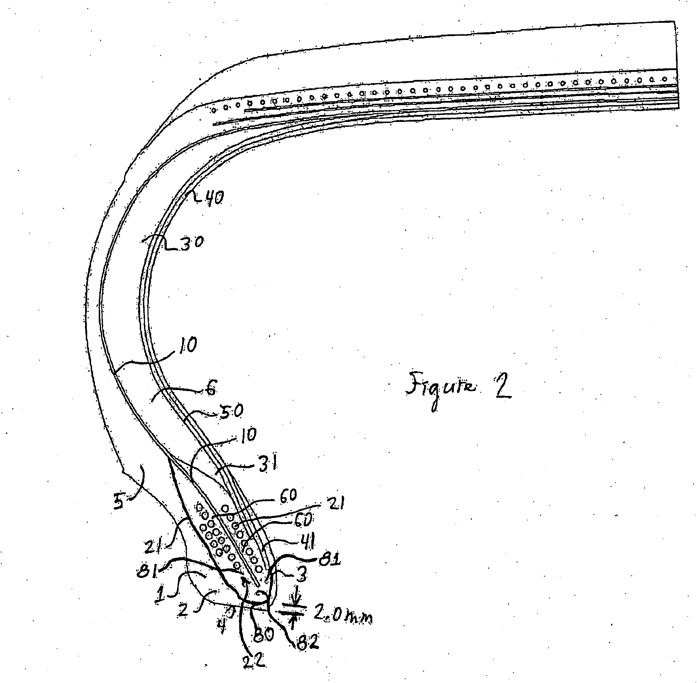

De manière avantageuse, ledit mélange caoutchoutique de la zone de siège est constituée d'une composition de caoutchouc présentant un module d'extension sécant MA10 à 10 % de déformation, mesuré à 23° C selon la norme ASTM D 412, allant de 5 à 15 MPa, et de préférence compris entre 6 et 9. Dans l'exemple illustré à la figure 2, ce module est de 7.5 MPa.

De manière avantageuse, ledit insert de flanc est disposé axialement intérieurement par rapport à ladite structure de renfort. La structure de renfort est alors disposée axialement extérieurement, optimisant ainsi son parcours en zone de tension. Ceci est particulièrement favorable au niveau de l'endurance.

Selon un mode de réalisation avantageux du pneumatique selon l'invention, chacun desdits inserts de flanc est de préférence constitué d'une composition de caoutchouc présentant un module d'extension sécant MA10 à 10 % de déformation, mesuré à 23° C selon la norme ASTM D 412, allant de 5 à 13 Mpa.

De manière préférentielle, chacun desdits inserts de flanc présente une épaisseur allant de 3 mm à 20 mm, et de préférence de 5 mm à 14 mm.

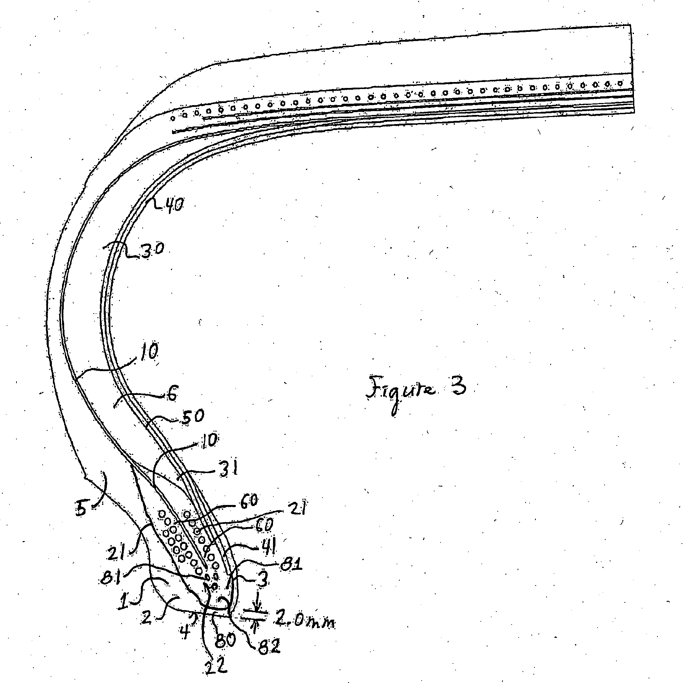

Tous les détails de réalisation sont donnés dans la description qui suit, complétée par les figures 1 et 3 annexées, dans lequelles:
- la figure 1 illustre une coupe radiale montrant essentiellement un bourrelet, un flanc, et la moitié du sommet d'un exemple de réalisation, d'un type connu de pneumatique, dont la zone de siège de bourrelet comporte une épaisseur maximale de 4.7 mm ;
- la figure 2 illustre une coupe radiale montrant essentiellement un bourrelet, un flanc, et la moitié du sommet d'un exemple de réalisation d'un type de pneumatique selon l'invention, similaire en de nombreux points à celui de la figure 1, mais dont la zone de siège de bourrelet comporte une épaisseur maximale de 2.0 mm ;
- la figure 3 illustre une coupe radiale montrant essentiellement un bourrelet, un flanc, et la moitié du sommet d'une variante de réalisation du pneumatique illustré à la figure 2, dont la zone de siège de bourrelet comporte une épaisseur maximale de 2.0 mm.

L'armature de renforcement ou renforcement des pneumatiques est à l'heure actuelle - et le plus souvent - constituée par empilage d'une ou plusieurs nappes désignées classiquement « nappes de carcasse », «nappes sommet », etc. Cette façon de désigner les armatures de renforcement provient du procédé de fabrication, consistant à réaliser une série de produits semi-finis en forme de nappes, pourvues de renforts filaires souvent longitudinaux, qui sont par la suite assemblées ou empilées afin de confectionner une ébauche de pneumatique. Les nappes sont réalisées à plat, avec des dimensions importantes, et sont par la suite coupées en fonction des dimensions d'un produit donné. L'assemblage des nappes est également réalisé, dans un premier temps, sensiblement à plat. L'ébauche ainsi réalisée est ensuite mise en forme pour adopter le profil toroïdal typique des pneumatiques. Les produits semi-finis dits « de finition » sont ensuite appliqués sur l'ébauche, pour obtenir un produit prêt pour la vulcanisation.

Un tel type de procédé "classique" implique, en particulier pour la phase de fabrication de l'ébauche du pneumatique, l'utilisation d'un élément d'ancrage (généralement une tringle), utilisée pour réaliser l'ancrage ou le maintien de l'armature de carcasse dans la zone des bourrelets du pneumatique. Ainsi, pour ce type de procédé, on effectue un retournement d'une portion de toutes les nappes composant l'armature de carcasse (ou d'une partie seulement) autour d'une tringle disposée dans le bourrelet du pneumatique. On crée de la sorte un ancrage de l'armature de carcasse dans le bourrelet.

La généralisation dans l'industrie de ce type de procédé classique, malgré de nombreuses variantes dans la façon de réaliser les nappes et les assemblages, a conduit l'homme du métier à utiliser un vocabulaire calqué sur le procédé ; d'où la terminologie généralement admise, comportant notamment les termes «nappes», «carcasse», «tringle», «conformation» pour désigner le passage d'un profil plat à un profil toroïdal, etc.

Cependant, il existe aujourd'hui des pneumatiques qui ne comportent à proprement parler pas de «nappes» ou de «tringles» d'après les définitions précédentes. Par exemple, le document EP 0 582 196 décrit des pneumatiques fabriqués sans l'aide de produits semi-finis sous forme de nappes. Par exemples, les fils des différentes structures de renfort sont appliqués directement sur les couches adjacentes de mélanges caoutchoutiques, le tout étant appliqué par couches successives sur un noyau toroïdal dont la forme permet d'obtenir directement un profil s'apparentant au profil final du pneumatique en cours de fabrication. Ainsi, dans ce cas, on ne retrouve plus de «semi-finis», ni de «nappes», ni de «tringle». Les produits de base tels les mélanges caoutchoutique et les renforts sous forme de fils ou filaments, sont directement appliqués sur le noyau. Ce noyau étant de forme toroïdale, on n'a plus à former l'ébauche pour passer d'un profil plat à un profil sous forme de tore.

Par ailleurs, la plupart des exemples de réalisation de pneumatiques décrits dans ce document ne disposent pas du "traditionnel" retournement de nappe carcasse autour d'une tringle. Dans ces exemples, ce type d'ancrage est remplacé par un agencement dans lequel on dispose de façon adjacente à ladite structure de renfort de flanc des filaments circonférentiels, le tout étant noyé dans une composition de caoutchouc d'ancrage ou de liaison.

Il existe également des procédés d'assemblage sur noyau toroïdal utilisant des produits semi-finis spécialement adaptés pour une pose rapide, efficace et simple sur un noyau central. Enfin, il est également possible d'utiliser un mixte comportant à la fois certains produits semi-finis pour réaliser certains aspects architecturaux (tels que des nappes, tringles, etc), tandis que d'autres sont réalisés à partir de l'application directe de mélanges, et/ou de renforts sous forme de filaments ou de bandelettes.

Dans le présent document, afin de tenir compte des évolutions technologiques récentes tant dans le domaine de la fabrication que pour la conception de produits, les termes classiques tels que «nappes», «tringles», etc, sont avantageusement remplacés par des termes neutres ou indépendants du type de procédé utilisé. Ainsi, le terme «renfort de type carcasse» ou «renfort de flanc» est valable pour désigner les fils de renforts d'une nappe carcasse dans le procédé classique, et les fils correspondants, en général appliqués au niveau des flancs, d'un pneumatique produit selon un procédé sans semi-finis. Le terme «zone d'ancrage» pour sa part, peut désigner tout autant le "traditionnel" retournement de nappe carcasse autour d'une tringle d'un procédé classique, que l'ensemble formé par les filaments circonférentiels, la composition de caoutchouc et les portions adjacentes de renfort de flanc d'une zone basse réalisée avec un procédé avec application sur un noyau toroïdal.

Dans la présente description, le terme "fil" désigne en toute généralité aussi bien des monofilaments que des multifilaments ou des assemblages comme des câbles, des retors ou encore tout type d'assemblage équivalent, et ceci, quels que soient la matière et le traitement de ces fils. Il peut s'agir par exemple de traitements de surface, enrobage ou pré-encollage pour favoriser l'adhérence sur le caoutchouc. L'expression « fil unitaire » désigne un fil composé d'un seul élément, sans assemblage. Le terme « multifilaments » désigne au contraire un assemblage d'au moins deux éléments unitaires pour former un câble, un retors, etc.

Par caractéristiques du fil, on entend par exemple ses dimensions, sa composition, ses caractéristiques et propriétés mécaniques (notamment le module), ses caractéristiques et propriétés chimiques, etc.

Dans la présente description, on entend par "contact" entre un fil et une couche de gomme de liaison le fait qu'au moins une partie de la circonférence extérieure du fil est en contact intime avec la composition de caoutchouc constituant de la gomme de liaison.

On sait que, de façon traditionnelle, la ou les nappes de carcasse sont retournées autour d'une tringle. La tringle remplit alors une fonction d'ancrage de la carcasse. Ainsi, notamment, elle supporte la tension se développant dans les fils de carcasse par exemple sous l'effet de la pression de gonflage. L'agencement décrit dans le présent document permet d'assurer une fonction similaire d'ancrage. Il est également connu d'utiliser la tringle de type traditionnel pour assurer une fonction de serrage du bourrelet sur une jante. L'agencement décrit dans le présent document permet également d'assurer un rôle similaire de serrage.

On désigne "flancs" les portions du pneumatique le plus souvent de faible rigidité de flexion situées entre le sommet et les bourrelets. On appelle "mélange flancs" les mélanges caoutchoutiques situés axialement extérieurement relativement aux fils de la structure de renforcement de la carcasse et à leur gomme de liaison. Ces mélanges ont habituellement un bas module d'élasticité.

On appelle "bourrelet" la portion du pneumatique adjacente radialement intérieurement au flanc.

On entend par "module d'extension MA10" d'un composition de caoutchouc, un module d'extension sécant apparent obtenu à une déformation d'extension uniaxiale de l'ordre de 10% mesuré à 23°C selon la norme ASTM D 412.

Pour rappel, "radialement vers le haut", ou "radialement supérieur" ou "radialement extérieurement signifie vers les plus grands rayons.

Une structure de renfort ou de renforcement de type carcasse sera dite radiale lorsque ses fils sont disposés à 90°, mais aussi, selon la terminologie en usage, à un angle proche de 90°.

La figure 2 illustre la zone basse, notamment le bourrelet 1 d'un pneumatique selon l'invention. Le bourrelet 1 comporte une portion axialement externe 2 prévue et conformée de façon à être placée contre le rebord d'une jante. La portion supérieur, ou radialement externe de la portion 2 forme une portion adaptée 5 au crochet de jante. Cette portion est souvent incurvée axialement vers l'extérieur, tel qu'illustré à la figure 1. La portion 2 se termine radialement et axialement vers l'intérieur par un siège de bourrelet 4, adapté pour être disposé contre un siège de jante. Le bourrelet comporte également une portion axialement interne 3, s'étendant sensiblement radialement depuis le siège 4 vers le flanc 6.

Le pneumatique comporte également une structure de renfort 10 ou de renforcement de type carcasse pourvue de renforts avantageusement configurés selon un agencement sensiblement radial. Cette structure peut être agencée de façon continue d'un bourrelet à l'autre, en passant par les flancs et le sommet du pneumatique, ou encore, elle peut comporter deux ou plusieurs parties, agencées par exemple le long des flancs, sans couvrir la totalité du sommet.

Afin de positionner les fils de renforcement de façon aussi précise que possible, il est très avantageux de confectionner le pneumatique sur support rigide, par exemple un noyau central imposant la forme de sa cavité intérieure. On applique sur ce noyau; dans l'ordre requis par l'architecture finale, tous les constituants du pneumatique, qui sont disposés directement à leur place finale, sans que le profil du pneumatique doive être modifié lors de la confection.

La fonction d'ancrage est notamment réalisée grâce à un agencement de fils circonférentiels, tel qu'illustré par exemple à la figure 2. Des fils circonférentiels 21 agencés de préférence sous forme de piles 22, forment un agencement de fils d'ancrage, prévu dans chacun des bourrelets. Ces fils sont de préférence métalliques, et éventuellement laitonnés. Diverses variantes prévoient avantageusement des fils de nature textile, comme par exemple en aramide, nylon, PET, PEN, ou hybridé, ou autre, comme par exemple en fibres de verre. Dans chaque pile, les fils sont avantageusement sensiblement concentriques et superposés.

Afin d'assurer un parfait ancrage de la structure de renfort, on réalise un bourrelet composite stratifié. A l'intérieur du bourrelet 1, entre les alignements de fil de la structure de renfort, on dispose les fils 21 orientés circonférentiellement. Ceux-ci sont disposés en une pile 22 comme sur les figures, ou en plusieurs piles adjacentes, ou en toute disposition judicieuse, selon le type de pneumatique et/ou les caractéristiques recherchées.

Les portions d'extrémité radialement internes de la structure de renfort 10 coopèrent avec les enroulements filaires. Il se crée ainsi un ancrage de ces portions dans lesdits bourrelets. Afin de favoriser cet ancrage, l'espace entre les fils circonférentiels et la structure de renfort est occupé par un composition de caoutchouc 60 de liaison ou d'ancrage. On peut également prévoir l'utilisation de plusieurs mélanges ayant des caractéristiques différentes, délimitant plusieurs zones, les combinaisons de mélanges et les agencements résultants étant quasiillimités. A titre d'exemple non limitatif, le module d'extension d'un tel mélange peut atteindre ou dépasser 10 à 15 MPa, et même dans certains cas atteindre, voire dépasser 40 MPa. Dans l'exemple illustré, le module est de 55 Mpa.

Les arrangements de fils peuvent être agencés et fabriqués de plusieurs façons. Par exemple, une pile peut avantageusement être constituée d'un seul fil enroulé (sensiblement à zéro degré) en spirale sur plusieurs tours, de préférence depuis le plus petit diamètre vers le plus grand diamètre. Une pile peut également être constituée de plusieurs fils concentriques posés l'un dans l'autre, de façon à ce que l'on superpose des anneaux de diamètre progressivement croissant. Il n'est pas nécessaire d'ajouter un mélange de caoutchouc pour assurer l'imprégnation du fil de renfort, ou des enroulements circonférentiels de fil.

Selon l'invention, une zone de siège de bourrelet 80, constituée d'un mélange caoutchoutique de module d'extension sécant à 10 % de déformation, mesuré à 23° C selon la norme ASTM D 412, allant due 5 à 15 MPa, et de préférence entre 6 et 9 MPa, et inférieur à celui du mélange de la zone d'ancrage, est disposée radialement intérieurement à la zone d'ancrage, et permet de séparer ladite zone d'ancrage du siège de la jante lorsque le pneumatique est monté. Dans l'exemple de la figure 2, ce module est de 7.5 MPa. De façon à augmenter la rigidité en torsion de la zone basse du pneumatique, l'épaisseur de la zone de siège de bourrelet est réduite par rapport aux pneumatiques comparables de type connu. Ainsi, ladite zone comporte une épaisseur maximale de 3.0 mm, et de préférence égale ou inférieure à 2.5 mm. Dans l'exemple de réalisation de la figure 2, la zone comporte une épaisseur de 2.2 mm.

Cette zone de siège 80 forme une bande d'épaisseur sensiblement constante sur au moins un quart, et de préférence au moins la moitié, de la largeur de la zone d'ancrage.

Par ailleurs, tel qu'illustré à la figure 2, la zone d'ancrage comporte, dans sa portion radialement inférieure, une portion 81 libre de fils circonférentiels. La zone d'ancrage peut également comporter, dans sa portion radialement inférieure, une portion 82 avantageusement libre de structure de renfort.

Tel que représenté à la figure 2, la portion 81 libre de fils circonférentiels peut avantageusement être plus haute que la portion 82 libre de fils de structure de renfort.

Un insert de flanc 30, constitué d'une composition de caoutchouc sensiblement rigide, s'étend sensiblement radialement entre la région de la base du flanc, jusqu'à la région de l'épaule du pneumatique. Cet insert a pour fonction principale de permettre au pneumatiques de supporter une certaine charge lors d'une utilisation à faible pression, voire à pression nulle.

Bien que les figures illustrent un insert de dimension importante, une fonction similaire pourrait être remplie par un ou plusieurs inserts de taille sensiblement différente, notamment plus petite.

Dans une proportion importante du flanc, l'insert 30 occupe une largeur supérieure à 50 % de l'épaisseur totale de la paroi du flanc.

Axialement intérieurement par rapport à l'insert 30, une couche de composition de caoutchouc sensiblement étanche 40 s'étend avantageusement sur sensiblement toute la portion interne du pneumatique. La couche d'étanchéité étant la plus intérieure, toutes les autres couches bénéficient de l'effet barrière ainsi créé. Le mélange 30 est avantageusement à base de caoutchouc butyl. Le module d'extension de ce mélange est relativement faible.

Tel qu'illustré dans les différents exemples de réalisation, la couche 40 est de préférence ancrée dans la portion axialement interne du bourrelet. Cette portion ancrée 41 ainsi résultante procure une protection efficace contre les éventuelles amorces de fissures, ou de décollement, etc.

Une couche de mélange de liaison 50 est avantageusement disposée entre la couche d'étanchéité 40 et l'insert 30. Cette couche est constituée d'un composition de caoutchouc de module d'extension sensiblement intermédiaire par rapport aux deux types de matériaux qui l'entourent: soit d'une part la couche d'étanchéité 40, de faible module d'extension, et l'insert 30, de module d'extension sensiblement élevé. Cette couche peut s'étendre sensiblement sur toute la hauteur de l'insert 30, sur chaque flanc, et est interrompue dans la zone du sommet. Selon un autre mode de réalisation, tel qu'illustré à la figure 2, la couche 50 s'étends d'un bourrelet à l'autre, y compris dans la zone du sommet. Selon une variante non illustrée, cette même couche comporte une épaisseur plus importante que dans les autres exemples illustrés.

La structure de renfort de type carcasse 10, chemine le long du flanc selon un parcours préférentiel voisin dudit insert 30. Ainsi, à la figure 2, ladite structure 10 est posée axialement extérieurement par rapport à l'insert 30 et chemine avantageusement en contact direct avec l'insert, sur la plus grande partie du parcours du flanc. A la base du flanc, dans la zone où l'insert rétrécit, le parcours de la structure 10 s'écarte de l'insert. De manière avantageuse, dans la région d'interface entre la zone d'ancrage et le flanc, la structure de renfort 10 suit un parcours le plus direct possible. Dans l'exemple illustré, une inclinaison de la zone d'ancrage, notamment des piles 22, permet à l'ensemble de la zone d'ancrage et de la portion de structure 10 se trouvant dans cette zone, d'être sensiblement aligné avec le bord axialement extérieur de l'insert 30, à la base de celui-ci, dans la portion située hors de la zone de rétrécissement 31. Ce type de disposition permet une reprise efficace des efforts de la structure de renfort de type carcasse par la zone d'ancrage, sans création de zone de concentration de contraintes.

Le contact direct entre la structure de renfort et l'insert permet d'optimiser les caractéristiques de rigidité et de résistance mécanique du flanc.

La fabrication industrielle d'un pneumatique selon l'invention peut être réalisée selon plusieurs types de procédés. De manière avantageuse, on utilise un principe de pose sur noyau central permettant soit la pose individuelle des éléments constituants tels les mélanges caoutchoutiques et les renforts (fils) ou encore la pose de produits semi-finis tels des lamelles caoutchoutiques renforcées.

## Revendications

1. Pneumatique adapté pour roulage à mobilité étendue, comportant au moins une structure de renfort de type carcasse (10) ancrée de chaque côté dudit pneumatique dans un bourrelet (1) dont la base est destinée à être montée sur un siège de jante, chacun desdits bourrelets s'étendant sensiblement radialement extérieurement sous la forme de flancs (6), les flancs rejoignant radialement vers l'extérieur une bande de roulement, la structure de renfort de type carcasse s'étendant circonférentiellement depuis le bourrelet vers ledit flanc (30), une armature de sommet, chacun desdits flancs étant renforcé par un insert de flanc constitué de composition de caoutchouc susceptible de supporter une charge correspondant à une partie du poids du véhicule lors d'une situation dans laquelle la pression de gonflage est sensiblement réduite ou nulle, chacun des bourrelets comportant par ailleurs une zone d'ancrage permettant le maintien de la structure de renfort et comportant d'une part un mélanges caoutchoutique d'ancrage (60) et d'autre part une série d'enroulements filaires circonférentiels (22) disposés dans ledit mélange caoutchoutique de part et d'autre de la portion d'extrémité de la structure de renfort, **caractérisé par** une zone de siège de bourrelet (80), constituée d'un mélange caoutchoutique de module d'extension sécant à 10 % de déformation, mesuré à 23° C selon la norme ASTM D 412, inférieur à celui du mélange de la zone d'ancrage (60), étant disposée radialement intérieurement à la zone d'ancrage, et permettant de séparer ladite zone d'ancrage du siège de la jante lorsque le pneumatique est monté, ladite zone comportant une épaisseur maximale de 3.0 mm, et de préférence égale ou inférieure à 2.5 mm.

2. Pneumatique selon la revendication 1, dans lequel ladite zone d'ancrage comporte, dans sa portion radialement inférieure, une portion libre de fils circonférentiels.

3. Pneumatique selon une des revendications précédentes, dans lequel la zone d'ancrage comporte, dans sa portion radialement inférieure, une portion libre de structure de renfort.

4. Pneumatique selon la revendication 3, dans lequel la portion libre de fils circonférentiels s'étend radialement sur une distance supérieure par rapport à la portion libre de structure de renfort.

5. Pneumatique selon l'une des revendications précédentes, dans lequel ladite zone de siège forme une bande d'épaisseur sensiblement constante sur plus du quart de la largeur de la zone d'ancrage.

6. Pneumatique selon une des revendications précédentes, dans lequel ledit mélange caoutchoutique de la zone d'ancrage est constituée d'une composition de caoutchouc présentant un module d'extension sécant MA10 à 10 % de déformation, mesuré à 23° C selon la norme ASTM D 412, supérieur à 10 MPa, et de préférence compris entre 30 et 60.

7. Pneumatique selon une des revendications précédentes, dans lequel ledit mélange caoutchoutique de la zone de siège est constituée d'une composition de caoutchouc présentant un module d'extension sécant MA10 à 10 % de déformation, mesuré à 23° C selon la norme ASTM D 412, allant de 5 à 15 MPa, et de préférence compris entre 6 et 9.

8. Pneumatique selon l'une des revendications précédentes, dans lequel ledit insert de flanc est disposé axialement intérieurement par rapport à ladite structure de renfort.

## Claims

1. A tyre suitable for extended-mobility travel, comprising at least one carcass-type reinforcement structure (10) anchored on each side of said tyre in a bead (1) the base of which is intended to be mounted on a rim seat, each of said beads extending substantially radially externally in the form of sidewalls (6), the sidewalls radially towards the outside joining a tread, the carcass-type reinforcement structure extending circumferentially from the bead towards said sidewall, a crown reinforcement, each of said sidewalls being reinforced by a sidewall insert (30) formed of rubber composition capable of bearing a load corresponding to part of the weight of the vehicle in a situation in which the inflation pressure is substantially reduced or zero, each of the beads furthermore comprising an anchoring zone permitting the reinforcement structure to be held and comprising on one hand an anchoring rubber mix (60) and on the other hand a series of circumferential cord windings (22) arranged in said rubber mix on either side of the end portion of the reinforcement structure, **characterised in that** the tyre further comprises a bead seat zone (80), formed of a rubber mix having a secant modulus of extension at 10% deformation, measured at 23°C in accordance with Standard ASTM D 412, less than that of the mix of the anchoring zone (60), being arranged radially internally to the anchoring zone, and making it possible to separate said anchoring zone from the seat of the rim when the tyre is mounted, said zone having a maximum thickness of 3.0 mm, and preferably equal to or less than 2.5 mm.

2. A tyre according to Claim 1, in which said anchoring zone comprises, in its radially lower portion, a portion free of circumferential cords.

3. A tyre according to one of the preceding claims, in which the anchoring zone comprises, in its radially lower portion, a portion free of reinforcement structure.

4. A tyre according to Claim 3, in which the portion free of circumferential cords extends radially over a greater distance relative to the portion free of reinforcement structure.

5. A tyre according to one of the preceding claims, in which said seat zone forms a band of substantially constant thickness over more than one quarter of the width of the anchoring zone.

6. A tyre according to one of the preceding claims, in which said rubber mix of the anchoring zone is formed of a rubber composition having a secant modulus of extension ME10 at 10% deformation, measured at 23°C in accordance with Standard ASTM D 412, of greater than 10 MPa, and preferably between 30 and 60.

7. A tyre according to one of the preceding claims, in which said rubber mix of the seat zone is formed of a rubber composition having a secant modulus of extension ME10 at 10% deformation, measured at 23°C in accordance with Standard ASTM D 412, of from 5 to 15 MPa, and preferably between 6 and 9.

8. A tyre according to one of the preceding claims, in which said sidewall insert is arranged axially internally relative to said reinforcement structure.

## Patentansprüche

1. Luftreifen, der zum Fahren mit erweiterter Mobilität geeignet ist, der mindestens eine Verstärkungsstruktur des Typs Karkasse (10) aufweist, die auf jeder Seite des Luftreifens in einem Wulst (1) verankert ist, dessen Basis dazu bestimmt ist, auf einen Felgensitz montiert zu werden, wobei sich jeder der Wülste im Wesentlichen radial außerhalb in Form von Flanken (6) erstreckt, wobei die Flanken radial nach außen zu einer Lauffläche reichen, wobei sich die Verstärkungsstruktur des Karkassentyps umfänglich von dem Wulst zu der Flanke erstreckt, sowie einen Laufflächenkronengürtel, wobei jede der Flanken durch einen Flankeneinsatz (30) verstärkt ist, der aus einer Kautschukverbindung besteht, die eine Last tragen kann, die einem Teil des Gewichts des Fahrzeugs in einer Situation entspricht, in der der Aufblasdruck stark verringert oder gleich Null ist, wobei jeder der Wülste ferner einen Ankerbereich aufweist, der das Halten der Verstärkungsstruktur erlaubt und einerseits ein Verankerungskautschukgemisch (60) und andererseits eine Reihe umfänglicher fadenförmiger Wicklungen (22) aufweist, die in dem Kautschukgemisch zu beiden Seiten des Endabschnitts der Verstärkungsstruktur angeordnet sind, **gekennzeichnet durch** einen Wulstsitzbereich (80), der aus einem Kautschukgemisch mit einem Sekantenmodul zu 10 % Verformung, gemessen bei 23°C gemäß der Norm ASTM D 412, besteht, das kleiner als das des Gemischs des Ankerbereichs (60), der radial innerhalb des Ankerbereichs angeordnet ist, ist, und es erlaubt, den Ankerbereich von dem Sitz der Felge zu trennen, wenn der Luftreifen montiert ist, wobei der Bereich eine maximale Stärke von 3,0 mm und vorzugsweise gleich oder kleiner 2,5 mm aufweist.

2. Luftreifen nach Anspruch 1, bei dem der Ankerbereich in seinem radialen unteren Teil einen Abschnitt ohne umfängliche Fäden aufweist.

3. Luftreifen nach einem der vorhergehenden Ansprüche, bei dem der Ankerbereich in seinem radialen unteren Teil einen Teil ohne Verstärkungsstruktur aufweist.

4. Luftreifen nach Anspruch 3, bei dem sich der Teil ohne umfängliche Fäden radial über eine größere Distanz im Vergleich zum Teil ohne Verstärkungsstruktur erstreckt.

5. Luftreifen nach einem der vorhergehenden Ansprüche, bei dem der Sitzbereich ein Band mit einer im Wesentlichen konstanten Stärke auf mehr als dem Viertel der Breite des Ankerbereichs bildet.

6. Luftreifen nach einem der vorhergehenden Ansprüche, bei dem das Kautschukgemisch des Ankerbereichs aus einer Kautschukverbindung besteht, die ein Sekantenmodul MA10 zu 10 % Verformung, gemessen bei 23°C gemäß der Norm ASTM D 412 größer als 10 MPa und vorzugsweise zwischen 30 und 60 aufweist.

7. Luftreifen nach einem der vorhergehenden Ansprüche, bei dem das Kautschukgemisch des Sitzbereichs aus einer Kautschukverbindung besteht, die ein Sekantenmodul MA10 zu 10 % Verformung, gemessen bei 23°C gemäß der Norm ASTM D 412 von 5 bis 15 MPa und vorzugsweise zwischen 6 und 9 aufweist.

8. Luftreifen nach einem der vorhergehenden Ansprüche, bei dem der Flankeneinsatz axial innerhalb in Bezug auf die Verstärkungsstruktur angeordnet ist.
